# EUROPEAN PATENT SPECIFICATION

(11) **EP 1 687 865 B1**
(45) Date of publication and mention of the grant of the patent: **28.12.2016**
(21) Application number: 04800257.0
(22) Date of filing: 03.11.2004
(51) Int. Cl.: H01M 10/04, H01M 10/28, H01M 2/08, H01M 10/02, H01M 10/30, H01M 2/12, H01M 2/36

(54) **A METHOD FOR MANUFACTURING A BIPOLAR BATTERY WITH A GASKET**
VERFAHREN ZUR HERSTELLUNG EINER BIPOLARBATTERIE MIT EINER DICHTUNG
PROCÉDÉ DE FABRICATION D'UNE BATTERIE BIPOLAIRE POSSÉDANT UN JOINT

(30) Priority: 14.11.2003 SE 0303012
(43) Date of publication of application: 09.08.2006
(73) Proprietor: Nilar International AB, 183 12 Täby (SE)
(72) Inventor: HOCK, David, Castel Rock, CO 80104 (US); PUESTER, Niel, Aurora, CO 80015-1711 (US); FREDRIKSSON, Lars, S-183 51 Täby (SE)
(74) Representative: Zacco Sweden AB
(86) International application number: PCT/SE2004/001594
(87) International publication number: WO 2005/048390

(56) References cited:
- WO-A1-03/026042
- WO-A1-03/026055
- WO-A1-2004/051767
- PATENT ABSTRACTS OF JAPAN vol. 2000, no. 12 03 January 2001 & JP 2000 260449 A (SANYO ELECTRIC CO LTD) 22 September 2000

## Description

### Technical field

The present invention relates to a method for manufacturing a bipolar battery.

### Background to the invention

A bipolar battery construction comprises an electrically conductive bipolar layer, so called biplate that serves as electrical interconnection between adjacent cells in the battery as well as a partition between the cells. In order for the bipolar construction to be successfully utilized, the biplate must be sufficiently conductive to transmit current from cell to cell, chemically stable in the cell's environment, capable of making and maintaining good contact to the electrodes and capable of being electrically insulated and sealable around the boundaries of the cell so as to contain electrolyte in the cell.

These requirements are more difficult to achieve in rechargeable batteries due to the charging potential that can generate gas inside the battery, and in alkaline batteries due to the creep nature of electrolyte. Achieving the proper combination of these characteristics has proven very difficult. For maintenance-free operation it is desirable to operate rechargeable batteries in a sealed configuration. However, sealed bipolar designs typically utilize flat electrodes and stacked-cell constructions that are structurally poor for containment of gases present and generated during cell operation. In a sealed construction, gases generated during charging need to be chemically recombined within the cell for stable operation. The pressure-containment requirement creates additional challenges in the design of a stable bipolar configuration.

New requirements in the field of transportation, communications, medical and power tools are generating specifications that existing batteries cannot meet. These include higher cycle life and the need for rapid and efficient recharges.

NiMH systems are seen as the alternative to meet cycle life, but costs for existing conventional fabrication are too high.

In US 5,344,723 by Bronoel et al., a bipolar battery is disclosed having a common gas chamber, which is created by providing an opening through the biplate (conductive suppers/separator). The opening is also provided with a hydrophobic barrier to prevent passage of electrolyte through the hole. Although the problem with pressure differences between the cells is solved, there is still a disadvantage with the described battery. The outer sealing around the edge of each biplate still has to be fluid-tight, which is very difficult to achieve. If the outer sealing is not fluid-tight, the electrolyte, contained in the separator between the electrodes and in the electrodes, may migrate from one cell to another.

In the published international patent application WO 03/026042 A1, assigned to the present applicant, a different solution, compared to the solution described in US 5, 344, 723, is proposed where a hydrophobic barrier is introduced around the electrodes instead of around the opening in the biplate. A pressure relief valve is also introduced to prevent a too high pressure to build up inside the case. It is however rather expensive to manufacture a bipolar battery of this design and it is therefore a need to construct a new bipolar battery having less number of components and using less complicated processing steps to manufacture a bipolar battery.

WO 2004/051767 relates to a bipolar battery and a method of manufacturing a bipolar battery having at least two cells, providing a housing, positive and negative electrodes, a biplate assembly, a separator between each negative and positive electrode forming a battery cell, and an inner barrier of a hydrophobic material to prevent an electrolyte path from one cell to another cell, and a frame between each biplate and/or biplate and end terminal being attached to each biplate in a non-sealing manner to permit ambient gas to pass between adjacent cells, and sealing the housing. In another embodiment, the frame is made with a thermoplastic elastomer compound that forms a better seal with the biplate, and one or more leakage channels can be moulded into the frame to ensure leakage path. A mouldable thermoplastic elastomer compound could be used as frame material. When this material is compressed it forms an adequate seal to prevent electrolyte paths, and it is also possible to mould passages in the material to ensure gas flow leakage paths.

### Summary of the invention

An object of the present invention is to simplify the manufacturing process of a bipolar battery.

It is an object of the invention to provide a method for manufacturing a bipolar battery.

This object is achieved by the features defined in the independent claim 1.

An advantage is that the present invention provides additional cost and assembly benefits compared to the prior art.

Further objects and advantages of the present invention will be apparent to those skilled in the art from the following detailed description of the disclosed bipolar electrochemical battery and the biplate assembly.

### Brief description of the drawings

The different embodiments shown in the appended drawings are not to scale or proportion, but exaggerated to point out different important features for the sake of clarity.
Fig. 1 shows a first embodiment of a gasket.
Figs. 2a and 2b show cross-sectional views of the gasket in figure 1.
Fig. 3 shows a second embodiment of a gasket.
Figs. 4a and 4b show cross-sectional views of the gasket in figure 3.
Fig. 5 shows a third embodiment of a gasket.
Figs. 6a and 6b show cross-sectional views of the gasket in figure 5.
Fig. 7 shows a cross-sectional view of a bipolar battery.
Fig. 8 shows a perspective view of a battery provided with adjustable terminal connectors.
Figs. 9a-9c show three different devices for vacuum filling a bipolar battery with a common gas space.
Fig. 10 shows a first flow chart for manufacturing a bipolar battery according to the invention.
Fig. 11 shows a second flow chart for manufacturing a bipolar battery according to the invention.
Fig. 12 shows a flowchart for filling a bipolar battery with electrolyte.
Fig. 13 shows a flow chart for formation of a bipolar battery.
Fig. 14 shows a partial cross-sectional view of a bipolar battery illustrating a first embodiment of a pressure relief valve.
Fig. 15a shows en exploded cross-sectional view of a second embodiment of a pressure relief valve.
Fig 15b shows a cross-sectional view of an assembled pressure relief valve according to fig. 15a.
Fig. 16 shows a cross-sectional view of a third embodiment of a pressure relief valve.

### Detailed description of preferred embodiments

The major benefits of the bipolar battery design are simplicity and low resistance losses. The parts count of the battery is relative low, consisting only of endplates and biplates, with appropriate assembly of electrodes, separators and electrolyte and sealing components. Batteries of a desired voltage are constructed by stacking the required number of biplates. The electrical connections between the cells are made as the battery is stacked, since each biplate is electrically conductive and impervious to electrolyte.

With the terminals at each end, the flow of current is perpendicular to the plate, which ensures uniform current and voltage distribution. Since the current path is very short the voltage drop is significantly reduced.

Bipolar batteries will also have significantly reduced weight, volume and manufacturing costs due to elimination of components and the manufacturing approach.

The major problem with bipolar batteries is obtaining a reliable seal between cells within the bipolar battery. Different solutions to this problem have been disclosed in the published international patent applications WO 03/009413, WO 03/026055 and WO 03/026042, and in the non-published pending US applications 10/434167 and 10/434168, all assigned to the present applicant.

The seal on a cell is of extreme importance for all types of batteries, and bipolar batteries are no exception. Individual cells contain the active materials (for NiMH batteries it is Nickel hydroxide positive and metal hydride hydrogen storage alloy negative, respectively), separator and electrolyte. The electrolyte in the separator is required for ion transport between the electrodes and the separator provides insulation to the conduction of electronic current flow between the electrodes. The best designs, optimised for longevity, weight and volume, require recombination of gasses.

Batteries always produce gasses as they are charged. The gassing rate increases as the battery nears full charge, and reaches maximum when fully charged. The gasses which are produced are primarily oxygen and hydrogen.

For Nickel based bipolar batteries, such as NiMH and NiCd, oxygen will recombine relatively rapidly with available active material in the negative electrode. Batteries are normally designed so oxygen will be the first gas generated if the cell is overcharged. This requires two actions:
1) Overbuild the negative active material, generally by 30%, to ensure that the positive electrode, which will gas oxygen on charge, will be the first to gas.
2) In a starved electrolyte battery, provide for gas passage from the positive to the negative, where the oxygen will recombine. The gas passages are obtained by controlling the amount of electrolyte within the pores of the electrode and through the separator. All surfaces of the electrode must be covered by a thin layer of electrolyte for the transport of ions, but the layer must be thin enough to permit gas diffusion through the layer, and must allow gas passages throughout the active layers and the separator.

The negative electrode would gas hydrogen if overcharged. Because gaseous Hydrogen does not recombine quickly, pressure would build up within the cell. The oxygen recombination effectively discharges the negative at the same rate it is being charged, thus preventing overcharge of the negative.

The surface area of the active material, combined with the uniform voltage distribution of the bipolar design, enhances rapid recombination.

For clarity sake, a starved electrolyte battery is defined as is an essentially moist but not wet construction, as opposed to flooded batteries like a typical lead acid car battery.

The bipolar approach will ensure that the voltage drop across the active material will be uniform in all areas, so that the entire electrode will come up to full charge at the same time. This will eliminate the major problem in conventional constructions, where parts of an electrode are overcharging and gassing while other (remote) areas of the electrode are not yet fully charged.

The cells in regular batteries are sealed to contain the electrolyte both for proper performance of the cells, and to prevent electrolyte paths, i.e. continuous ionically conductive paths, between adjacent cells. The presence of electrolyte paths between cells will allow the electrolyte-connected cells to discharge at a rate that is determined by the resistance of the path (length of path and cross section of path). The seals on bipolar batteries are more important because the electrolyte path is potentially much shorter. It should be noted that an important feature of this disclosure is the use of a gasket with an integrated electrolyte barrier to minimize or eliminate the conductivity of any potential ionic conduction path. An additional concern is the amount of heat generated by operation of the cell. Depending on the magnitude of heat generated, the design must be able to reject the heat and maintain a safe operating temperature.

If an electrolyte path is developed between cells, a small intercellular leakage can be overcome by the periodic full charging of the battery. The battery may be overcharged by a set amount and at a low rate. The low rate would allow fully charged cells to recombine gasses without generating pressure and dissipate the heat from the recombination/overcharge. Cells that have small intercellular electrical leakage paths would become balanced.

It is rarely necessary that a battery be fully charged to achieve its useful function. Batteries are routinely over specified and overbuilt. If an operation requires 50 AH (Ampere Hours), the requirement is usually specified at least 10% higher. Since batteries lose capacity over their lifetime, the capacity of a new battery is increased by the expected loss, resulting in possibly a 70 AH requirement for a new battery in this example. The manufacturer will probably have a median design target of 75 AH to allow for variations in the manufacturing process. Much of this overbuild is to compensate for the life capacity degradation that is caused by the overcharging.

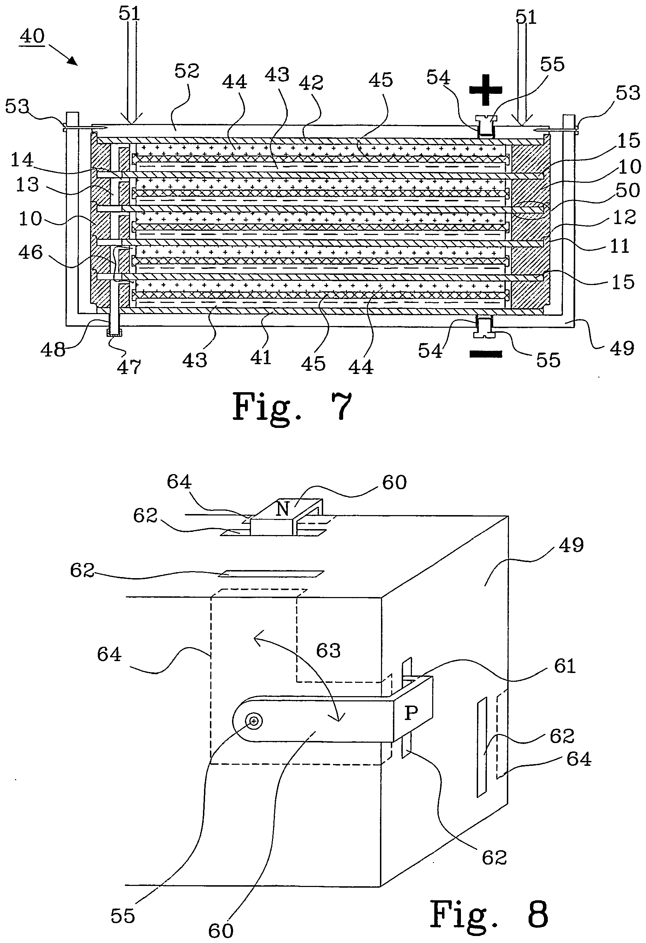

An essential feature in the novel bipolar batteries are the creation of a common gas space within the battery. The means for creating a common gas space for all cells in a bipolar battery comprises a gasket having a predetermined shape. The gasket is arranged between adjacent biplate and/or a biplate and an end plate, as described below. The gasket is preferably made with a thermoplastic elastomer compound that forms a seal with the biplate under pressure. One or more gas channels are molded into the frame to ensure gas leakage path. When several gaskets are stacked upon each other, as described in connection with figure 7, a common gas space will be created which will eliminate the pressure difference between the cells in a bipolar battery.

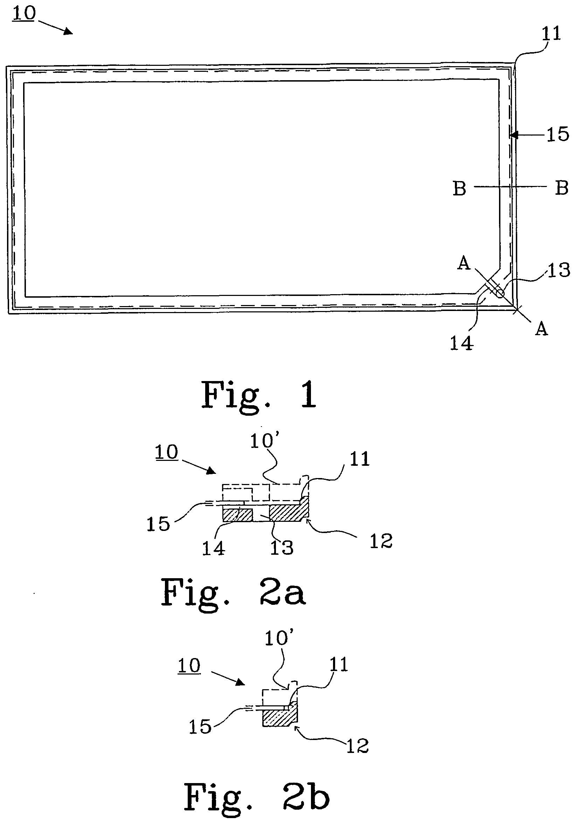

Figure 1 shows a first embodiment of a gasket 10. The gasket 10 is manufactured in a hydrophobic material having deformable properties, such as an elastomer or other material that create a continuous seal when deformed, to be able to function as a sealing. The gasket preferably has elastic properties, and a suitable material is a thermoplastic elastomer. Thermoplastic elastomers may be obtained from several manufacturers e.g. Engage® 8407 available from DuPont Dow Elastomers, DYNAFLEX® G2780-001 available from GLS Corp. or KRATON™ G-7705 available from Kraton™ Polymers. The gasket is preferably injection molded into the desired size and shape.

The gasket 10 is provided with a rim 11 at the edge on the upper side and a corresponding indentation 12 on the reverse side. The rim 11 and the indentation 12 will provide alignment of the gaskets when they are stacked upon each other in an assembled battery, see figure 7. The rim further serves to align the biplate relative to the gasket. The gasket is further provided with a through-hole 13 and a groove 14 to connect the through-hole 13 to the space on the inside of the gasket 10 when a biplate is mounted to the gasket. The through-hole 13 and the groove 14 provide a gas channel between adjacent cells in the assembled battery, and the hydrophobic properties of the gasket prevent electrolyte from creating an ionically conductive path between adjacent cells. The gasket thus has four purposes when mounted:
1) prevent electrolyte from creating an ionically conductive path (leakage) between adjacent cells in a bipolar battery,
2) provide a gas channel between adjacent cells to create a common gas space within a bipolar battery,
3) provide an outer pressure tight seal for the cells in a bipolar battery, and
4. provide an electronically insulating support structure between biplates and between the biplates and the endplates.

Figure 2a shows a cross-sectional view of the gasket in figure 1 along A-A, and figure 2b sows a cross-sectional view of the gasket in figure 1 along B-B. The presence of a second gasket 10' is indicated in the figures to further show how the rim 11 is intended to be received in the indentation when mounted in a battery.

A biplate 15 is shown with a dashed line in figures 1, 2a and 2b to indicate the position of a biplate 15 in an assembled bipolar battery. It should be noted that the biplate must not occlude the opening of the through-hole 13 to provide the common gas space, but a portion of the groove 14 must be covered by a biplate 15 to prevent electrolyte leakage between cells. A biplate with a hole aligned with the hole in the gasket may alternatively be employed to serve the purposes listed here.

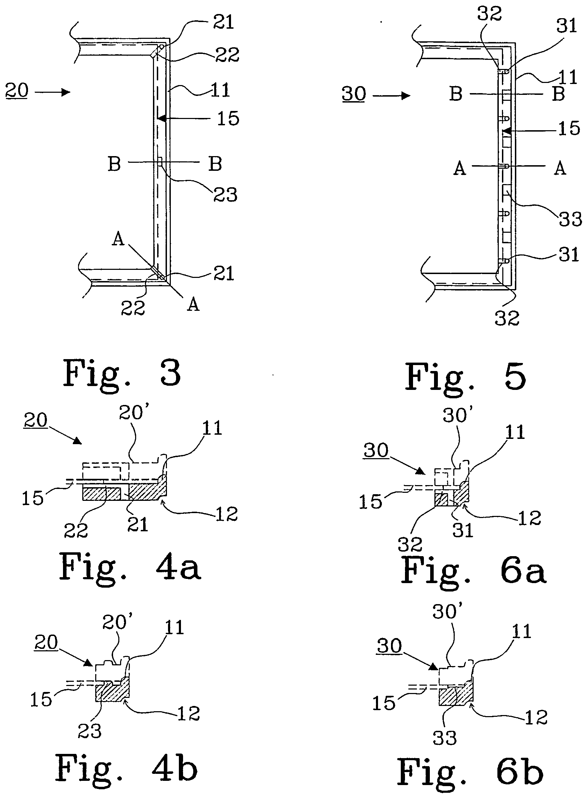

Figure 3 shows a partial view of a second embodiment of a gasket 20. The gasket 20 is provided with a rim 11 and a corresponding indentation 12, as described above. The gasket is provided with two rather small through-holes 21, each having a groove 22 to connect the through-hole 21 to the space inside the gasket as previously described in connection with figure 1. A biplate 15 is also shown with a dashed line to indicate the position of a biplate 15 in an assembled bipolar battery. To prevent the biplate to be misaligned during assembling of the battery, a guidance means 23, such as a boss, is provided on the gasket 20. It should be noted that it is advantageous that the boss is designed in such a way that a passageway may be established between the two through-holes beside the biplate of each cell. In this embodiment the boss does not stretch all the way from the biplate to the rim.

Figure 4a is a cross-sectional view along A-A in figure 3, and figure 4b is a cross-sectional view along B-B in figure 3. The presence of a second gasket 20' is indicated in the figures to further show how the rim 11 is intended to be received in the indentation 12 when mounted in a battery.

Figure 5 shows a partial view of a third embodiment of a gasket 30. The gasket 30 is provided with a rim 11 and a corresponding indentation 12, as described above. The gasket is provided with five rather small through-holes 31, each having a groove 32 to connect the through-hole 31 to the space inside the gasket as previously described in connection with figure 1. A biplate 15 is also shown with a dashed line to indicate the position of a biplate 15 in an assembled bipolar battery. To prevent the biplate to be misaligned during assembling of the battery, several guidance means 33, such as bosses, are provided on the gasket 30. It should be noted that it is advantageous that the bosses are designed in such a way that a passageway may be established between the five through-holes beside the biplate of each cell. In this embodiment the bosses are lower than the thickness of the biplate.

Figure 6a is a cross-sectional view along A-A in figure 5, and figure 6b is a cross-sectional view along B-B in figure 5. The presence of a second gasket 30' is indicated in the figures to further show how the rim 11 is intended to be received in the indentation 12 when mounted in a battery.

It may be advantageous, but necessarily required, to alter the design of the gasket in contact with the endplates to better nest and seal with the endplates. The endplates may have a different size than the biplates, so the gasket may need to conform to the different size.

Figure 7 shows a bipolar battery 40 in cross section having five cells. The battery comprises a negative end plate 41 and a positive end plate 42, each having a negative electrode 43 and a positive electrode 44, respectively. Four biplate assemblies, comprising a negative electrode 43 a biplate 15, and a positive electrode 44, are stacked on top of each other in a sandwich structure between the two end terminals. A separator 45 is arranged between each adjacent negative and positive electrodes making up a cell, the separator 45 contains an electrolyte and a predetermined percentage of gas passages, about 5 % is a typical value for gas passages in starved electrolyte batteries.

A gasket 10, as described in connection with figure 1, is provided between adjacent biplates and/or a biplate and an end plate. As indicated in the figure by the arrow 46, gas may flow from one cell to another and thereby all cells share a common gas space through the gas passages in the gasket. If an electrode in a cell starts to gas before the others, this pressure will be distributed through-out the whole common gas space. The gas will pass from a cell, through a groove 14 and via a through-hole 13 of a first gasket to a groove 14 of a second gasket, and thereafter into a second cell.

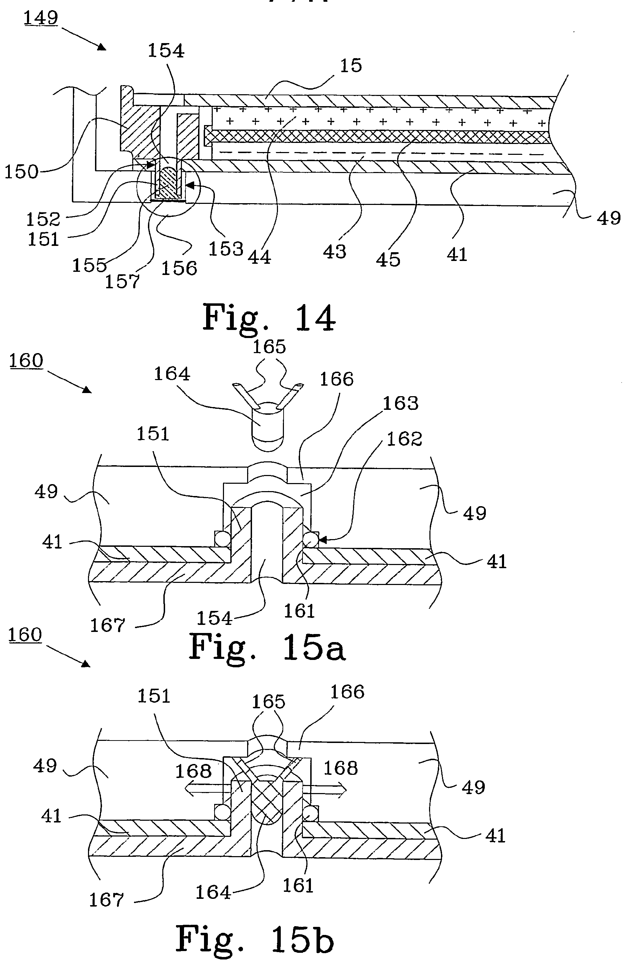

If the pressure within the common space exceeds a predetermined value, a pressure relief valve 47 will open to connect the common gas space with the ambient environment. The pressure relief valve 47 is arranged through one of the end plates, in this example the negative end plate 41 and comprises a feed-through 48. In an alternative embodiment, the feed-through 48 may be integrally formed onto the endplate 41. A preferred embodiment of a pressure relief valve and feed-through is described in connection with figures 14, 15a-b and 16.

Additionally, a pressure sensor (not shown) may also be mounted through one of the end plates to measure the actual pressure inside the battery cells. The case 49 is preferably made from an insulating material, but may naturally be made from a conductive material. Each frame is preferably made from an insulating material and is designed in such a way to ensure electrical insulation between each biplate 15 and a possibly conductive case. The gasket 10 is provided with a recess 50 where the biplates and the positive end terminal 42 are placed during manufacture and are maintained during operation by applying a pressure as indicated by the arrows 51. The recess 50 is the space between two gaskets that will be established when the indentation 12 and the rim 11 of the gasket are in communication.

The pressure is maintained by fixating a lid 52 to the case 49 by some kind of fastening means 53, such as screws, and will ensure that each cell has a predetermined width, which is approximately equal to the compressed height of the gasket 10.

Alternatively, the lid 52 may be fixed in position by any of several other standard means, including crimping, interference fits, epoxy, heat seal or solvent, depending of the battery case construction and battery application criteria.

It should be noted that there may be a space between the outside of the gasket 10 and the inside surface of the case 49, since the gasket itself provide the pressure tight seal for the battery. The case 49 with the lid 52 provide a practical solution for creating the required pressure to establish the pressure tight seal between the gaskets and the biplates and the positive and negative endplates.

Relief valves and pressure sensors are readily available to a man skilled in the arts and are not described in more detail.

Each end plate is provided with a terminal connection. The terminal connection comprises a terminal feed-through 54, which preferably is secured to the case 49 by press-fitting. Each terminal feed-through 54 is attached to each endplate 41 and 42, respectively, by soldering, gluing, welding etc. to establish a good electrical contact. The terminal feed-through is in this embodiment provided with internal threads. Screws 55 may be used to attach any type of terminal connectors to the battery.

It should be noted that although figure 7 shows a bipolar battery having a negative endplate 41 arranged in the lower portion of the battery, this feature is not essential for the construction of the battery. The negative and the positive terminal positions of the battery are interchangeable by trading the positions of all the negative and positive electrodes in the battery. The function of the battery will still be the same.

Fig. 8 shows a perspective view of a battery 40 provided with adjustable terminal connectors 60. A terminal connector 60 is attached to each endplate of the battery via the terminal feed-through 54, using a screw 55. Each terminal connector may be directed either to the short side of the battery or the long side of the battery. The terminal connector marked with a "P" (positive terminal) is directed to the short side of the battery and the terminal connector is bent in such a way that the far end 61 of the terminal connector 60 may be inserted into a groove 62 arranged in the case 49 of the battery when the terminal connector is secured to the terminal feed-through 54 by the screw 55. The terminal connector is thus secured to the case.

The second terminal connector marked "N" (negative terminal) is in this figure directed toward the long side of the battery and likewise secured to the case 49. Each terminal connector may be rotated to a different position, as indicated by the arrow 63.

Furthermore, there is a possibility to embed the terminal connectors into the case by providing a depression in the case, as indicating by the dashed lines 64, to allow close stacking of batteries without the risk of shorting the terminal connectors. The terminal connectors could also be provided with some type of insulating material, e.g. red for the positive terminal connector and black for the negative terminal connector. The positions of the grooves 62 on each side of the case are preferably offset, to facilitate the use of bus bar connections.

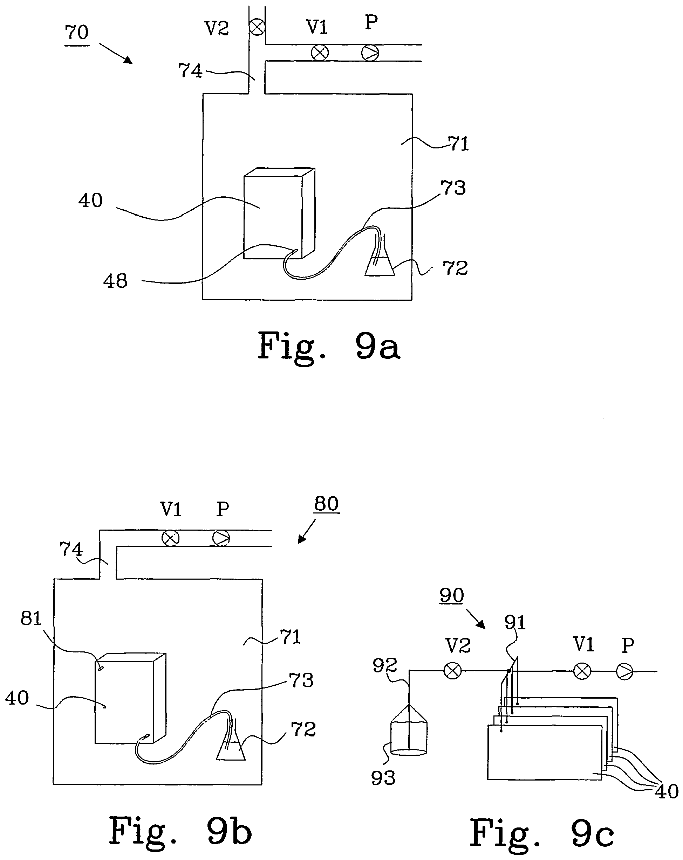

Figures 9a to 9c show three different devices for vacuum filling a bipolar battery. Normally, a NiMH-battery is filled during the assembling of the battery, and this may naturally also be performed with this type of battery, but it is possible to use vacuum filling techniques to introduce electrolyte into the finished battery.

Figure 9a shows a first filling device 70, where a bipolar battery 40 is placed inside a vacuum chamber 71 together with a beaker 72 of electrolyte (e.g. 6M KOH). A tube 73, preferably flexible, is attached to the feed-through 48 of the pressure relief valve 47. A vacuum pipe 74 is connected to the vacuum chamber 71 and thereafter divided into two branches, where a first branch is provided with a first valve V1 in series with a vacuum pump P, and the second branch is provided with a second valve V2.

The procedure of vacuum filling a battery comprises the following steps:
1) Open valve V1 and let the pump P evacuate the air inside the vacuum chamber 71. The air inside the battery 40 will also be evacuated through the tube 73, which can be seen as bubbles in the electrolyte.
2) Close valve V1 when a desired vacuum pressure has been obtained inside the vacuum chamber 71.
3) Open valve V2 to increase the pressure inside the vacuum chamber 71 by letting ambient air flow into the chamber. The increased pressure inside the chamber will push electrolyte into the battery 40 and slowly fill the separators and voids inside the battery with electrolyte. The electrolyte is sucked into the battery using capillary force.

Figure 9b shows a second filling device 80 where a bipolar battery 40 also is placed inside a vacuum chamber 71 together with a beaker 72 of electrolyte (e.g. 6M KOH). A tube 73, preferably flexible, is attached to the feed-through 48 of the pressure relief valve 47. A second opening 81 into the common gas space is provided in the case of the battery. The opening could be used for arranging a pressure sensor after the electrolyte has been introduced into the battery. A vacuum pipe 74 is connected to the vacuum chamber 71 and a valve V1 is provided in series with a vacuum pump P.

Air will be evacuated from the battery 40 through the opening 81 when the valve V1 is open and the vacuum pump P is decreasing the pressure inside the vacuum chamber 71. When the air is evacuated from the battery, electrolyte will be introduced from the beaker 72, through the tube 73 and in through the feed-through 48 of the pressure relief valve 47. The valve V1 is closed when enough electrolyte has been introduced into the battery. The vacuum chamber 71 is vented and the battery, now filled with electrolyte, can be removed. Figure 9c shows a third filling device 90 that does not contain a vacuum chamber. The feed-through 48 of the pressure release valve 47 of several batteries 40 may be connected to a common manifold 91. The manifold 91 is connected to a first valve V1, which is in series with a vacuum pump P. A tube 92 (or pipe) is immersed in a container 93 filled with electrolyte. The tube 92 is connected to the manifold via a second valve V2. The device operates in the following way. The pump will evacuate the air inside all the batteries 40 when the valve V1 is opened. The valve V1 is closed when a sufficient low pressure has been obtained. The valve V2 is thereafter opened and electrolyte will be distributed to all batteries 40 through the manifold. The electrolyte is distributed inside each battery using capillary forces.

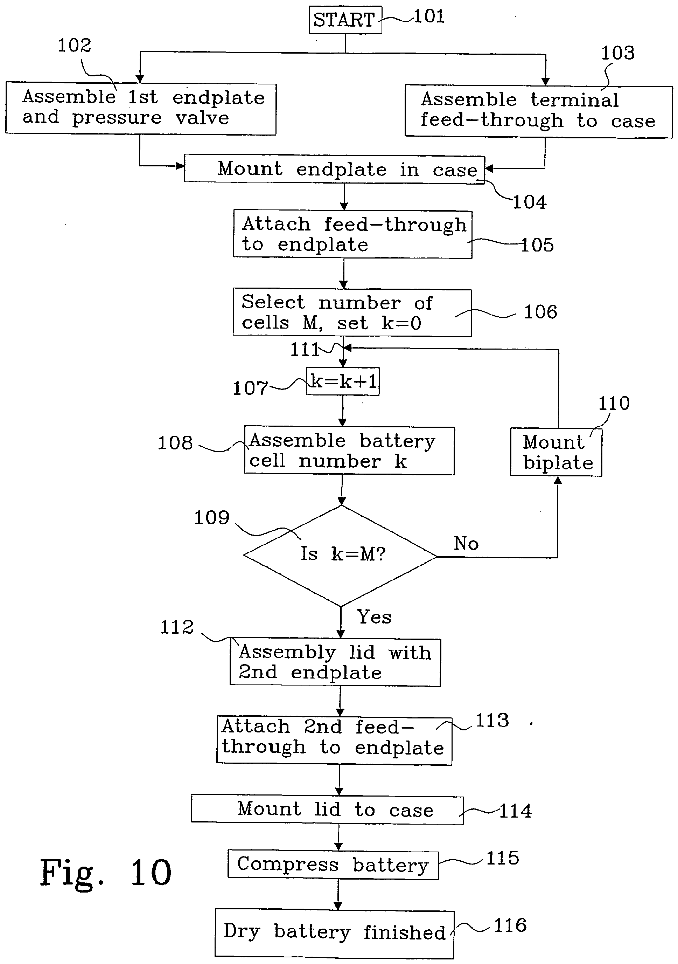

The manufacturing process for making a bipolar battery is described in connection with figures 10, 11, 12 and 13.

The first flow chart shown in figure 10 describes the process of manufacturing a bipolar battery, as described in connection with figure 7, up to a battery without any electrolyte, i.e. a dry battery. The flow starts in step 101 and continues to step 102 and 103 in parallel. In step 102 a feed-through 48 for the pressure relief valve 47 is assembled to the first endplate 41, and in step 103 a terminal feed-through 54 is assembled to the non-conducting case 49.

The first endplate 41 assembled with the pressure relief valve feed-through 48 is mounted in the case 49 being provided with the terminal feed-through 54 in step 104. The terminal feed-through 54 is thereafter attached to the first endplate 41 in step 105, using any of the methods described above.

The desired number of battery cells M is thereafter selected in step 106 and a counter is set to zero, k=0. In step 107, the counter is increased by 1, k=k+1 and the flow continues to step 108, where cell number "k" is assembled, that is a gasket 10; 20; 30, as previously described in connection to figures 1 to 6, is mounted inside the case 49 around the edge of the end plate 41, a first electrode 43 is positioned within the gasket on top of the first endplate 41, one or more separators 45 are thereafter arranged on top of the first electrode 43 and a second electrode 44 is arranged on top of the separator(s) within the gasket. The gasket may alternatively be mounted after the electrodes and the separator(s) have been mounted inside the case 49.

The flow continues to step 109, where a decision is made whether the selected number of cells M has been manufactured. If the answer is "No", the flow is fed back to point 111 via step 110 where a biplate is mounted on top of the gasket. The flow repeats step 108 and 109 until the selected number of cells has been made.

When k=M, the flow continues to step 112 where the lid 52 of the case 49 is provided with a terminal feed-through 54 and a second endplate 42 is assembled to the lid 52. The terminal feed-through 54 is thereafter attached to the second endplate 42 in step 113, using any of the methods described above.

The lid 52 is mounted to the case 49 in step 114 a pressure is applied in step 115 to the lid 52 in a direction 51 previously described in connection with figure 7. A dry bipolar battery is thereby finished in step 116.

The process of stacking battery components on top of each other to form the right number of battery cells may naturally be performed in a number of different ways. For instance, biplate assemblies may be provided, each comprising a first electrode attached to a first side of a biplate and a second electrode attached to a second side of the biplate, the first side being opposite to the second side, where the separator material is added in the fed back loop instead of the biplate as disclosed in figure 10. It is also possible that the material of each cell is pre-manufactured and each cell is stacked during the assembling process of the battery.

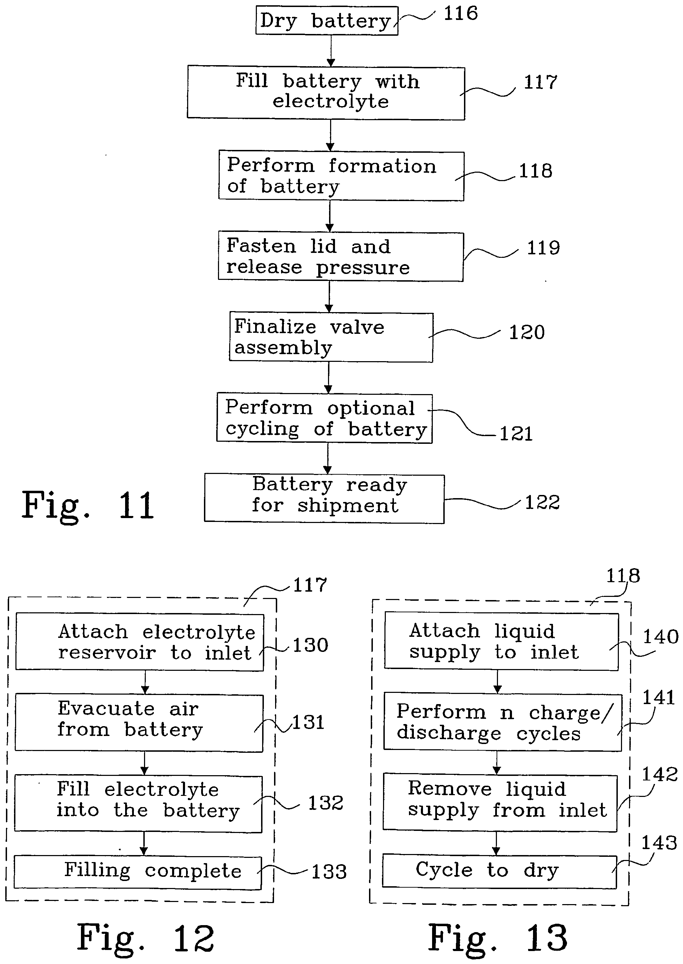

Figure 11 is a flow chart describing the process of producing a functional battery from the dry battery obtained in step 116, figure 10. The flow starts in step 116 and continues to step 117 where the battery is filled with electrolyte. The filling process is described in more detail in connection with figure 12.

A formation procedure is thereafter performed in step 118 to initialize the battery to normal operation. This formation procedure is described in more detail in connection with figure 13.

When the formation is completed, the lid 52 is fastened to the case 49 in step 119 and the pressure applied to the lid previously is released. It is of course possible to first release the pressure and thereafter recompress the lid to the case, fasten the lid 52 to the case 49 and thereafter release the pressure. Alternatively, fasten the lid between steps 115 and 116 in the dry battery assembly procedure.

The assembling of the pressure release valve is finalized in step 120, and the finished battery is optionally cycled in step 121 before the battery is ready for shipment, step 122. The process for filling of the battery in step 117, comprises attachment of an electrolyte reservoir 72; 93 to an inlet 48 of a battery 40, e.g. the feed-through 48 of the pressure relief valve 47, see step 130.

The air in the battery is thereafter evacuated from the battery in step 131, either directly or indirectly by placing the battery in a vacuum chamber 71 that is evacuated. A separate outlet 81 for the air is possible, but the inlet 48 for the electrolyte may be used as an air outlet during the evacuation procedure.

Electrolyte is introduced into the battery 40 in step 132 after the air has been evacuated from the battery or during the evacuation dependent on the equipment configuration used, sees figures 9a to 9c. The electrolyte is distributed mside to the separators 45 inside the battery 40 using capillary forces.

A battery filled with electrolyte is obtained in step 133.

The formation process of the battery in step 118 comprises two stages, where the first stage is charging and discharging cycles of the battery under "wet" conditions. The wet condition is provided in step 140 with attachment of a liquid supply to the inlet 48 of the battery. The liquid could either be water or electrolyte.

At least two charge/discharge cycles "n" are thereafter performed in step 141.

Stage two is performed under more or less "dry" conditions by removing the liquid supply from the inlet 48 in step 142, and thereafter performing a predetermined number of charge/discharge cycles to dry out the battery 40 from excess electrolyte in step 143.

A starved battery is thus produced.

It is however possible to fasten the lid before filling the battery. The formation may occur with an optional second fill between formation cycles, and it is not necessary to continuously supply liquid to the battery during electrical cycling.

When filling the battery with electrolyte, the electrolyte will transfer to the separator, the porous electrodes and to some extent into the surrounding volume out to the gasket, thus each battery cell is filled with electrolyte.

Figure 14 shows a partial cross-sectional view of a bipolar battery 149 similar to the battery described in connection with figure 7. Parts of the battery assembly that are the same as parts described in connection with figure 7 have the same reference numerals. Only a part of the battery cell closest to the end plate 41 is shown and the end gasket 150 arranged between the endplate 41 and the biplate 15 is designed in a similar way to the gaskets described earlier in the description with the exception that a flexible feed through 151, which is a part of the pressure relief valve 156, is an integral part of the end gasket 150.

The endplate 41 is provided with an opening 152 that preferably is smaller than the outer dimensions of the flexible feed through 151, thus providing a seal between the endplate 41 and the base of the flexible feed through 151 when the flexible feed through 151 is introduced into the opening 152. The case 49 is provided with an opening 153 that is larger than the outer dimensions of the flexible feed through 151, which is required to preserve the appropriate function of the assembled pressure relief valve 156.

A channel 154 that connects the common gas space within the bipolar battery to the ambient environment is present inside the flexible feed through and when a pin 155, having a cross-sectional dimension that is larger than the cross-sectional dimension of the channel 154, is introduced into the channel, the common gas space is sealed from the ambient environment. A retainer, such as a star washer 157, is preferably used to secure the pin 155 in the channel 154.

The ratio between the cross-sectional dimensions of the pin 155 and the channel 154 is selected to create a pressure relief valve that will open at a specific pressure. The pressure relief valve opens when the pressure within the common gas space is above a selected threshold by forcing the walls of the flexible feed through 151 to deflect into the available space between the flexible feed through and the opening 153 in the case 49. A gap is thus introduced between the inside of the channel 154 and the pin 155. It is possible to create a pressure relief valve that operates in a pressure range from less than 5 psi to more than 100 psi by selecting the appropriate dimensions of the channel and the pin to result the desired pressure at which the valve will open.

Figures 15a and 15b show a partial cross-sectional view of a second embodiment of a pressure relief valve 160, where figure 15a is an exploded view and figure 15b is an assembled view of the same pressure relief valve 160.

An endplate 41 is provided with an opening, preferably circular, into which a flexible feed through 151, that may be an integral part of a gasket 167, is introduced. A sealing 161, such as an O-ring, is arranged around the flexible feed through to provide an improved sealing between the case 49 and the endplate 41, and between the endplate 41 and the interior of the bipolar battery to prevent undesired electrolyte to creep into the region between the case and endplate in the even that the pressure relief valve opens. A recess 162 is provided in the case 49 around an opening 163 in the case 49 to hold the sealing 161, and the opening 163 is larger than the outside of the flexible feed through 151 as described above. A pin 164, provided with at least two flexible extensions 165, is designed to be introduced into the channel 154 of the flexible feed through 151, and the flexible extensions 165 are designed to hold the pin 164 in place when mounted, as shown in figure 15b, against a retainer in the shape of a rim 166.

Arrows 168 illustrates how the flexible feed through is deflected when the pressure within the bipolar battery is too high and the pressure relief valve 160 opens.

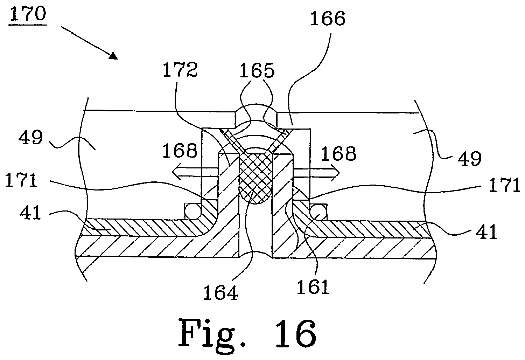

Fig. 16 shows a third embodiment of an assembled pressure relief valve 170. The case 49 is provided with a similarly shaped opening as shown in figures 15a and 15b, with a sealing 161 arranged in a recess 162. The endplate 41 is in this example provided with an opening with drawn edges 171. The opening may be produced by first punching an opening through the endplate and thereafter drawing the edges to create the desired three-dimensional shape of the opening. The shape of the flexible feed through 172 is adapted to follow the shape of the drawn opening in the endplate 41 which will provide good sealing properties between the interior of the battery and the case 49. The channel 154 inside the flexible feed through 172 is adapted to hold the pin 164 and the extensions 165 are adapted to hold the pin in place during operation against the rim 166.

The pressure relief valve may be an integrated part of the end gasket provided within a bipolar battery, but it may also be implemented as a separate pressure relief valve in any type of battery.

The type of material selected to be used to produce the flexible feed through of the pressure relief valve together with the ratio between the inner cross-sectional dimension of the channel and the cross-sectional dimension of the pin will affect the pressure threshold of the assembled pressure relief valve.

Although the specification only discloses a NiMH bipolar battery, it should be noted that the same technology may be applied when producing any type of Nickel based bipolar battery, such as Nickel Cadmium (NiCd) bipolar batteries, or Nickel Zinc (NiZn) bipolar batteries.

The gasket should not be limited to be used in NiMH bipolar batteries, but should include any type of bipolar battery having a starved electrolyte configuration.

## Claims

1. A method for manufacturing a starved electrolyte bipolar battery, comprising the steps of:
- providing positive electrodes, separators, negative electrodes and biplates to construct a desired number of battery cells inside a case, arranged between a positive endplate and a negative endplate,
- providing a positive access point to the positive endplate, and a negative access point to the negative endplate,
- providing a gasket between each biplate and/or biplate and each endplate to create a common gas space within the battery, said gasket being made from a hydrophobic material to prevent the creation of an electrolyte path between adjacent cells when mounted in a battery, the gasket comprising a frame which is designed to at least partially encompass a biplate when mounted in the bipolar battery, and means to permit gas passage through the gasket, wherein said gasket is made from a material with deformable properties to provide a sealing to the biplate when mounted in the bipolar battery, whereby an outer pressure tight seal of the battery is obtained,
- providing a passage to the common gas space from the outside of the battery,
- compressing all gaskets arranged between the positive endplate and the negative endplate to provide an outer pressure tight seal for the battery and to prevent the formation of electrolyte paths between adjacent cells, and
- filling the separators with electrolyte, wherein the step of filling of the separators with electrolyte comprises:
- attaching an electrolyte reservoir to the passage to the common gas space,
- evacuating air from the common gas space,
- filling electrolyte into the common gas space, and
- transferring electrolyte to each cell from the common gas space.

2. The method according to 1, wherein the method further comprises a formation step after the separators has been filled, which formation comprises at least two charging and discharging cycles.

3. The method according to claim 2, wherein the formation step comprises the steps of:
- charging and discharging the battery with a liquid supply attached to the passage, and
- charging and discharging the battery without a liquid supply attached to the passage to remove excess liquid from the battery.

4. The method according to claim 3, wherein the liquid is selected to be water and/or electrolyte.

5. The method according to claim 1, wherein the air is evacuated from the common gas space through the passage before the electrolyte is filled into the common gas space.

6. The method according to claim 1, wherein the air in the common gas space is evacuated using an opening being separate from the passage, whereby the electrolyte is introduced into the common gas space during evacuation.

7. The method according to any of the claims 1-6, further comprising the step of providing guiding means in the gasket to control the position of a biplate during assembling of the bipolar battery.

8. The method according to claim 7, wherein the guiding means is provided as at least one boss.

9. The method according to claim 7 or 8, wherein the guidance means is provided as the rim of the gasket.

10. The method according to any of claims 1-9, further comprising the step of providing the gasket with a flexible feed-through as part of a pressure relief valve when mounted in the battery.

11. The method according to claim 10, wherein the flexible feed-through is provided with a channel that connects the gas space within the mounted battery with the ambient environment.

12. The method according to any of claims 1-11, wherein said gasket is made from an elastic material with deformable properties.

13. The method according to any of claims 1-11, wherein said gasket is made from a thermoplastic elastomer.

14. The method according to claim 13, wherein the gasket is made through an injection molding process.

15. The method of any of the claims 1-14, wherein a dry battery without any electrolyte is manufactured first, and then the step of filling the separators with electrolyte is performed.

## Patentansprüche

1. Verfahren zur Herstellung einer Bipolarbatterie mit absorbiertem Elektrolyt, umfassend die Schritte:
- Bereitstellen von positiven Elektroden, Separatoren, negativen Elektroden und Doppelplatten zum Konstruieren einer gewünschten Anzahl von Batteriezellen in einem Gehäuse, angeordnet zwischen einer positiven Endplatte und einer negativen Endplatte,
- Bereitstellen eines positiven Zugangspunktes zur positiven Endplatte und eines negativen Zugangspunktes zur negativen Endplatte,
- Bereitstellen einer Dichtung zwischen den jeweiligen Doppelplatten und/oder zwischen einer Doppelplatte und jeder Endplatte zum Erzeugen eines gemeinsamen Gasraums innerhalb der Batterie, wobei die Dichtung aus einem hydrophobem Material hergestellt wird, um das Erzeugen eines Elektrolytwegs zwischen benachbarten Zellen bei deren Einbau in eine Batterie zu verhindern, wobei die Dichtung einen Rahmen umfasst, der dazu ausgelegt ist, zumindest teilweise eine Doppelplatte bei Einbau in die Bipolarbatterie zu umfassen, und Mittel, um einen Gasfluss durch die Dichtung zu ermöglichen, wobei die Dichtung aus einem Material mit verformbaren Eigenschaften besteht, um eine Abdichtung der Doppelplatte bei Einbau in die Bipolarbatterie bereitzustellen, wobei eine außenliegende druckdichte Abdichtung der Batterie erreicht wird,
- Bereitstellen eines Durchlasses zum gemeinsamen Gasraum von außerhalb der Batterie,
- Zusammendrücken aller zwischen der positiven Endplatte und der negativen Endplatte angeordneten Dichtungen, um eine außenliegende druckdichte Abdichtung der Batterie bereitzustellen und die Bildung von Elektrolytwegen zwischen benachbarten Zellen zu verhindern, und
- Befüllen der Separatoren mit Elektrolyt, wobei der Schritt des Befüllens der Separatoren mit Elektrolyt umfasst:
- Befestigen eines Elektrolytreservoirs am Durchlass zum gemeinsamen Gasraum,
- Evakuieren der Luft aus dem Gasraum,
- Einfüllen von Elektrolyt in den gemeinsamen Gasraum, und
- Überführen des Elektrolyten aus dem gemeinsamen Gasraum in die einzelnen Zellen.

2. Verfahren nach 1, wobei das Verfahren ferner einen Formationsschritt nach dem Befüllen der Separatoren umfasst, wobei die Formation mindestens zwei Lade- und Entladezyklen umfasst.

3. Verfahren nach Anspruch 2, wobei der Formationsschritt folgende Schritte umfasst:
- Laden und Entladen der Batterie mit einem am Durchlass angeordneten Flüssigkeitsvorrat, und
- Laden und Entladen der Batterie ohne einen am Durchlass angeordneten Flüssigkeitsvorrat, um überschüssige Flüssigkeit aus der Batterie zu entfernen.

4. Verfahren nach Anspruch 3, wobei als Flüssigkeit Wasser und/oder Elektrolyt ausgewählt wurde.

5. Verfahren nach Anspruch 1, wobei die Luft aus dem gemeinsamen Gasraum durch den Durchlass evakuiert wird, bevor der gemeinsame Gasraum mit Elektrolyt befüllt wird.

6. Verfahren nach Anspruch 1, wobei die Luft im gemeinsamen Gasraum mittels einer vom Durchlass getrennten Öffnung evakuiert wird, wobei der Elektrolyt während des Evakuierens in den gemeinsamen Gasraum eingeführt wird.

7. Verfahren nach einem der Ansprüche 1-6, das ferner den Schritt des Bereitstellens von Führungsmitteln in der Dichtung umfasst, um die Position einer Doppelplatte beim Zusammenbau der Bipolarbatterie zu steuern.

8. Verfahren nach Anspruch 7, wobei das Führungsmittel als mindestens ein Vorsprung bereitgestellt wird.

9. Verfahren nach Anspruch 7 oder 8, wobei das Führungsmittel als Rand der Dichtung bereitgestellt wird.

10. Verfahren nach einem der Ansprüche 1-9, das ferner den Schritt des Bereitstellens der Dichtung mit einer flexiblen Durchführung als Bestandteil des Druckentlastungsventils bei Einbau in die Batterie umfasst.

11. Verfahren nach Anspruch 10, wobei die flexible Durchführung mit einem Kanal bereitgestellt wird, der den Gasraum innerhalb der montierten Batterie mit der Umgebung verbindet.

12. Verfahren nach einem der Ansprüche 1-11, wobei die Dichtung aus einem elastischen Material mit verformbaren Eigenschaften besteht.

13. Verfahren nach einem der Ansprüche 1-11, wobei die Dichtung aus einem thermoplastischen Elastomer besteht.

14. Verfahren nach Anspruch 13, wobei die Dichtung durch einen Spritzgussprozess hergestellt wird.

15. Verfahren nach einem der Ansprüche 1-14, wobei zuerst eine Trockenbatterie ohne Elektrolyt hergestellt wird und danach der Schritt des Befüllens der Separatoren mit Elektrolyt durchgeführt wird.

## Revendications

1. Procédé de fabrication d'une batterie bipolaire à électrolyte appauvri, comprenant les étapes consistant à :
- fournir des électrodes positives, des séparateurs, des électrodes négatives et des bi-plaques afin de construire un nombre souhaité de cellules de batterie à l'intérieur d'un boîtier, agencés entre une plaque d'extrémité positive et une plaque d'extrémité négative,
- fournir un point d'accès positif pour la plaque d'extrémité positive et un point d'accès négatif pour la plaque d'extrémité négative,
- fournir un joint entre chaque bi-plaque et/ou entre une bi-plaque et chaque plate d'extrémité afin de créer un espace gazeux commun à l'intérieur de la batterie, ledit joint étant composé d'un matériau hydrophobe afin d'empêcher la création d'un trajet d'électrolyte entre des cellules adjacentes lorsqu'elles sont montées dans une batterie, le joint comprenant un cadre qui est conçu pour enserrer au moins partiellement une bi-plaque lorsqu'elle est montée dans la batterie bipolaire et un moyen pour permettre un passage gazeux à travers le joint, dans lequel ledit joint est composé d'un matériau avec des propriétés déformables, afin de fournir une étanchéité à la bi-plaque lorsqu'elle est montée dans la batterie bipolaire, moyennant quoi un scellement étanche à la pression externe de la batterie est obtenu,
- fournir un passage vers l'espace gazeux commun depuis l'extérieur de la batterie,
- comprimer tous les joints agencés entre la plaque d'extrémité positive et la plaque d'extrémité négative pour fournir un scellement étanche à la pression externe pour la batterie et empêcher la formation de trajets d'électrolyte entre des cellules adjacentes et
- remplir les séparateurs d'électrolyte, dans lequel l'étape de remplissage des séparateurs avec de l'électrolyte comprend :
- la fixation d'un réservoir d'électrolyte au passage vers l'espace gazeux commun,
- l'évacuation de l'air depuis l'espace gazeux commun,
- le remplissage de l'électrolyte dans l'espace gazeux commun et
- le transfert de l'électrolyte vers chaque cellule depuis l'espace gazeux commun.

2. Procédé selon la revendication 1, où le procédé comprend en outre une étape de formation une fois que les séparateurs ont été remplis, laquelle formation comprend au moins deux cycles de charge et de décharge.

3. Procédé selon la revendication 2, dans lequel l'étape de formation comprend les étapes consistant à :
- charger et décharger la batterie avec une alimentation liquide fixée sur le passage et
- charger et décharger la batterie sans alimentation de liquide fixée sur le passage pour évacuer le liquide excédentaire de la batterie.

4. Procédé selon la revendication 3, dans lequel le liquide est sélectionné pour être de l'eau et/ou un électrolyte.

5. Procédé selon la revendication 1, dans lequel l'air est évacué de l'espace gazeux commun à travers le passage avant le remplissage de l'électrolyte dans l'espace gazeux commun.

6. Procédé selon la revendication 1, dans lequel l'air dans l'espace gazeux commun est évacué à l'aide d'une ouverture séparée du passage, moyennant quoi l'électrolyte est introduit dans l'espace gazeux commun pendant l'évacuation.

7. Procédé selon l'une quelconque des revendications 1 à 6, comprenant en outre l'étape de fourniture de moyen de guidage dans le joint, afin de contrôler la position d'une bi-plaque pendant le montage de la batterie bipolaire.

8. Procédé selon la revendication 7, dans lequel le moyen de guidage est fourni en tant qu'au moins un bossage.

9. Procédé selon la revendication 7 ou 8, dans lequel le moyen de guidage est prévu au niveau du rebord du joint.

10. Procédé selon l'une quelconque des revendications 1 à 9, comprenant en outre l'étape de fourniture du joint avec une traversée flexible, dans le cadre d'une partie d'une soupape de surpression lorsqu'il est monté dans la batterie.

11. Procédé selon la revendication 10, dans lequel la traversée flexible est dotée d'un canal qui relie l'espace gazeux à l'intérieur de la batterie montée avec l'environnement ambiant.

12. Procédé selon l'une quelconque des revendications 1 à 11, dans lequel ledit joint est composé d'un matériau élastique avec des propriétés déformables.

13. Procédé selon l'une quelconque des revendications 1 à 11, dans lequel ledit joint est composé d'un élastomère thermoplastique.

14. Procédé selon la revendication 13, dans lequel le joint est réalisé par le biais d'un processus de moulage par injection.

15. Procédé selon l'une quelconque des revendications 1 à 14, dans lequel une batterie sèche sans électrolyte est fabriquée en premier, puis l'étape de remplissage des séparateurs avec l'électrolyte est réalisée.
